# EUROPEAN PATENT APPLICATION

(11) **EP 4 169 642 A1**
(43) Date of publication of application: **26.04.2023**
(21) Application number: 20940809.5
(22) Date of filing: 17.06.2020
(51) Int. Cl.: B23B 27/10, B23B 29/12, B23B 51/06, B23C 5/28, B23Q 11/10

(54) **COOLANT SUPPLY MECHANISM**

(71) Applicant: Sumitomo Electric Hardmetal Corp., Itami-shi, Hyogo 664-0016 (JP)
(72) Inventor: HARADA, Gaku, Itami-shi, Hyogo 664-0016 (JP); HIRAO, Satoru, Itami-shi, Hyogo 664-0016 (JP); FUJIMURA, Akio, Itami-shi, Hyogo 664-0016 (JP)
(74) Representative: Boult Wade Tennant LLP
(86) International application number: PCT/JP2020/023733
(87) International publication number: WO 2021/255851

(57) **Abstract**

A coolant supply mechanism is attachable to a cutting insert. The cutting insert has a first bottom surface, a first upper surface, and a first side surface. The first upper surface includes a corner portion that is located at a corner of the first upper surface when viewed in a plan view and that is contiguous to the first side surface so as to form a cutting edge, and a center portion located adjacent to the corner portion on a side opposite to the cutting edge when viewed in a plan view. The first upper surface is depressed toward the first bottom surface side at the center portion. The coolant supply mechanism includes a main body portion having a second bottom surface that is in contact with the center portion when attached to the cutting insert, a second upper surface opposite to the second bottom surface, and a second side surface contiguous to the second bottom surface and the second upper surface. The second side has a first surface including a first portion that is in contact with a stepped surface between the corner portion and the center portion when attached to the cutting insert, and a second portion that is located on the second upper surface side with respect to the first portion. The second portion is provided with a first coolant hole to eject coolant toward the cutting edge.

## Description

### TECHNICAL FIELD

The present disclosure relates to a coolant supply mechanism.

### BACKGROUND ART

The cutting tool described in PTL 1 (WO 2018/143089) has a holder, a cutting insert, and a clamping member. The cutting insert is disposed on a pocket of the holder. The clamping member is attached to the holder by a screw. A flow path through which coolant flows is formed inside the clamping member. The flow path formed inside the clamping member is opened at the tip of the clamping member, thereby forming a flow outlet via which the coolant is ejected. The tip side of the clamping member is in contact with the cutting insert, thus fixing the cutting insert to the holder.

### CITATION LIST

### PATENT LITERATURE

PTL 1: WO 2018/143089

### SUMMARY OF INVENTION

A coolant supply mechanism of the present disclosure is a coolant supply mechanism attachable to a cutting insert. The cutting insert has a first bottom surface, a first upper surface opposite to the first bottom surface, and a first side surface contiguous to the first bottom surface and the first upper surface. The first upper surface includes a corner portion that is located at a corner of the first upper surface when viewed in a plan view and that is contiguous to the first side surface so as to form a cutting edge, and a center portion located adjacent to the corner portion on a side opposite to the cutting edge when viewed in a plan view. The first upper surface is depressed toward the first bottom surface side at the center portion. The coolant supply mechanism includes a main body portion having a second bottom surface that is in contact with the center portion when attached to the cutting insert, a second upper surface opposite to the second bottom surface, and a second side surface contiguous to the second bottom surface and the second upper surface. The second side surface has a first surface including a first portion that is in contact with a stepped surface between the corner portion and the center portion when attached to the cutting insert, and a second portion that is located on the second upper surface side with respect to the first portion. The second portion is provided with a first coolant hole to eject coolant toward the cutting edge.

### BRIEF DESCRIPTION OF DRAWINGS

Fig. 1 is a perspective view of a cutting tool 100.
Fig. 2 is a plan view of a cutting insert 10.
Fig. 3 is a bottom view of cutting insert 10.
Fig. 4 is a side view of cutting insert 10.
Fig. 5 is a perspective view of a cutting insert 10 according to a modification.
Fig. 6 is a perspective view of a coolant supply mechanism 20.
Fig. 7 is a plan view of coolant supply mechanism 20.
Fig. 8 is a side view of coolant supply mechanism 20.
Fig. 9 is a perspective view of coolant supply mechanism 20 when attached to cutting insert 10.
Fig. 10 is a perspective view of a holder 30.

### DETAILED DESCRIPTION

### [Problem to be Solved by the Present Disclosure]

In the cutting tool described in PTL 1, when the attachment position of the clamping member is deviated, a relative positional relation of the flow outlet of the clamping member with respect to the cutting edge of the cutting insert is also deviated. As a result, in the cutting tool described in PTL 1, the coolant cannot be precisely supplied to the cutting edge of the cutting insert.

The present disclosure has been made in view of the above problem of the conventional art. More specifically, the present disclosure provides a coolant supply mechanism by which coolant can be precisely supplied to a cutting edge of a cutting insert.

### [Advantageous Effect of the Present Disclosure]

According to the coolant supply mechanism of the present disclosure, coolant can be precisely supplied to a cutting edge of a cutting insert.

### [Description of Embodiments]

First, embodiments of the present disclosure are listed and described.
(1) A coolant supply mechanism according to an embodiment is a coolant supply mechanism attachable to a cutting insert. The cutting insert has a first bottom surface, a first upper surface opposite to the first bottom surface, and a first side surface contiguous to the first bottom surface and the first upper surface. The first upper surface includes a corner portion that is located at a corner of the first upper surface when viewed in a plan view and that is contiguous to the first side surface so as to form a cutting edge, and a center portion located adjacent to the corner portion on a side opposite to the cutting edge when viewed in a plan view. The first upper surface is depressed toward the first bottom surface side at the center portion. The coolant supply mechanism includes a main body portion having a second bottom surface that is in contact with the center portion when attached to the cutting insert, a second upper surface opposite to the second bottom surface, and a second side surface contiguous to the second bottom surface and the second upper surface. The second side surface has a first surface including a first portion that is in contact with a stepped surface between the corner portion and the center portion when attached to the cutting insert, and a second portion that is located on the second upper surface side with respect to the first portion. The second portion is provided with a first coolant hole to eject coolant toward the cutting edge.
   In the coolant supply mechanism of (1), the first coolant hole is positioned with respect to the cutting edge by the first surface being in contact with the stepped surface when attached to the cutting insert. Therefore, according to the coolant supply mechanism of (1), the coolant can be precisely supplied to the cutting edge of the cutting insert.
(2) The coolant supply mechanism of (1) may further include a columnar portion that extends from the second bottom surface along a direction intersecting the second bottom surface and that is inserted into a first through hole formed in the center portion so as to extend through the cutting insert along a direction from the first upper surface toward the second upper surface when attached to the cutting insert.
   According to the coolant supply mechanism of (2), by inserting the columnar portion into the first through hole, positioning with respect to the cutting insert can be more readily performed.
(3) In the coolant supply mechanism of (2), inside of the columnar portion may be hollow. The coolant may be ejected from the first coolant hole through the inside of the columnar portion.
   According to the coolant supply mechanism of (3), the coolant flows inside the columnar portion, thereby cooling the cutting insert.
(4) In the coolant supply mechanism of (3), the main body portion may be provided with a third through hole extending through the main body portion along a direction from the second upper surface toward the second bottom surface, the third through hole being located at a position overlapping with a second through hole formed in the center portion so as to extend through the cutting insert along a direction from the first upper surface toward the first bottom surface when attached to the cutting insert. The columnar portion may be located between the first surface and the third through hole when viewed in a plan view.
   In the coolant supply mechanism of (4), when the coolant flows inside the columnar portion, the coolant can cool a portion of the cutting insert located closer to the cutting edge. Therefore, according to the coolant supply mechanism of (4), the effect of cooling the cutting insert can be further increased.
(5) In the coolant supply mechanism of (1) to (3), the second side surface may be provided with a second coolant hole to eject the coolant toward the first side surface.
   According to the coolant supply mechanism of (5), the coolant can also be supplied to the flank face side of the cutting edge.
(6) In the coolant supply mechanism of (5), the second side surface may include a second surface facing the first side surface with a space being interpose between the second surface and the first side surface. The second coolant hole may be formed in the second surface.
(7) In the coolant supply mechanism of (6), an inner diameter of the second coolant hole may be larger than an inner diameter of the first coolant hole.
(8) In the coolant supply mechanism of (6), a center position of the second coolant hole may be located close to the second bottom surface with respect to a center position of the first coolant hole.

### [Details of Embodiments of the Present Disclosure]

Next, details of embodiments of the present disclosure will be described with reference to figures. In the figures described below, the same or corresponding components are denoted by the same reference characters, and the same explanation will not be made repeatedly.

### (Configuration of Cutting Tool according to Embodiment)

Hereinafter, a configuration of a cutting tool (hereinafter, referred to as "cutting tool 100") according to an embodiment will be described.

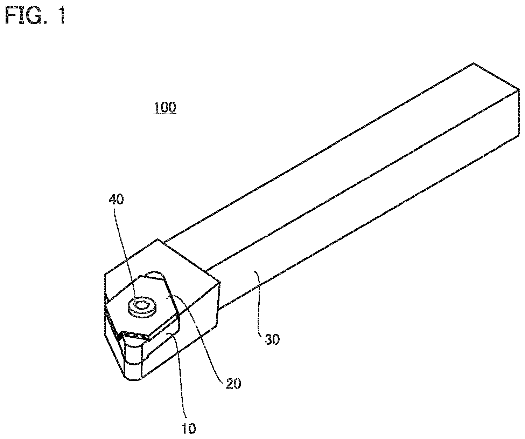

Fig. 1 is a perspective view of a cutting tool 100. As shown in Fig. 1, cutting tool 100 has a cutting insert 10, a coolant supply mechanism 20, a holder 30, and a fixing member 40.

### <Cutting Insert 10>

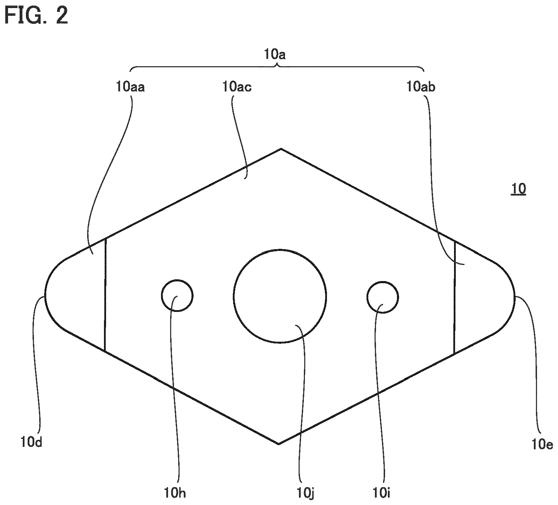

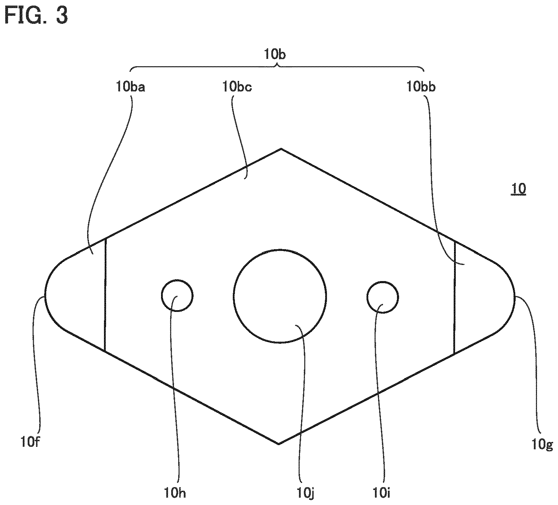

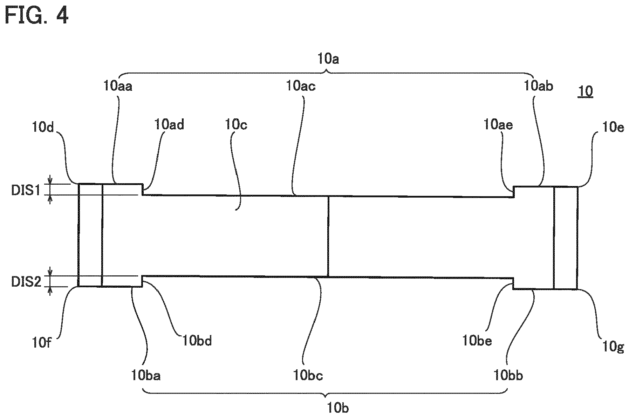

Cutting insert 10 is composed of, for example, a cemented carbide. Fig. 2 is a plan view of cutting insert 10. Fig. 3 is a bottom view of cutting insert 10. Fig. 4 is a side view of cutting insert 10. As shown in Figs. 2 to 4, cutting insert 10 has an upper surface 10a, a bottom surface 10b, and a side surface 10c. Upper surface 10a is a surface opposite to bottom surface 10b. Side surface 10c is contiguous to upper surface 10a and bottom surface 10b.

Upper surface 10a has a corner portion 10aa, a corner portion 10ab, and a center portion 10ac when viewed in a plan view. Corner portion 10aa and corner portion 10ab are located at the corners of upper surface 10a when viewed in a plan view. Corner portion 10aa and corner portion 10ab are located at diagonal positions when viewed in a plan view. A ridgeline between corner portion 10aa and side surface 10c forms a cutting edge 10d, and a ridgeline between corner portion 10ab and side surface 10c forms a cutting edge 10e.

Center portion 10ac is located adjacent to corner portion 10aa on a side opposite to cutting edge 10d when viewed in a plan view. From another viewpoint, it can be said that center portion 10ac is located adjacent to corner portion 10ab on a side opposite to cutting edge 10e. Upper surface 10a is depressed toward the bottom surface 10b side at center portion 10ac. As a result, a stepped surface 10ad exists between center portion 10ac and corner portion 10aa, and a stepped surface 10ae exists between center portion 10ac and corner portion 10ab.

Bottom surface 10b has a corner portion 10ba, a corner portion 10bb, and a center portion 10bc when viewed in a plan view. Corner portion 10ba and corner portion 10bb are located at the corners of bottom surface 10b when viewed in a plan view. Corner portion 10ba and corner portion 10bb are located at diagonal positions when viewed in a plan view. A ridgeline between corner portion 10ba and side surface 10c forms a cutting edge 10f, and a ridgeline between corner portion 10bb and side surface 10c forms a cutting edge 10g.

Center portion 10bc is located adjacent to corner portion 10ba on a side opposite to cutting edge 10f when viewed in a plan view. From another viewpoint, it can be said that center portion 10bc is located adjacent to corner portion 10bb on a side opposite to cutting edge 10g. Bottom surface 10b is depressed toward the upper surface 10a side at center portion 10bc. As a result, a stepped surface 10bd exists between center portion 10bc and corner portion 10ba, and a stepped surface 10be exists between center portion 10bc and corner portion 10bb.

A distance between corner portion 10aa (corner portion 10ab) and center portion 10ac is defined as a distance DIS1. A distance between corner portion 10ba (corner portion 10bb) and center portion 10bc is defined as a distance DIS2. Distance DIS1 is equal to distance DIS2, for example.

A through hole 10h, a through hole 10i, and a through hole 10j are formed in cutting insert 10. Each of through hole 10h, through hole 10i, and through hole 10j extends through cutting insert 10 along a direction from upper surface 10a toward bottom surface 10b (along the thickness direction of cutting insert 10). Each of through hole 10h, through hole 10i, and through hole 10j is formed in center portion 10ac (center portion 10bc).

Through hole 10j is located at the center of cutting insert 10 when viewed in a plan view. Through hole 10h, through hole 10i, and through hole 10j are located on a diagonal line that connects the corner on the corner portion 10aa side to the corner on the corner portion 10ab side when viewed in a plan view. Through hole 10j exists between through hole 10h and through hole 10i when viewed in a plan view.

Through hole 10h is located close to the corner on the corner portion 10aa side with respect to through hole 10j when viewed in a plan view. Through hole 10i is located close to the corner on the corner portion 10ab side with respect to through hole 10j when viewed in a plan view. The inner diameter of through hole 10j is larger than each of the inner diameter of through hole 10h and the inner diameter of through hole 10i. The inner diameter of through hole 10h is equal to the inner diameter of through hole 10i, for example.

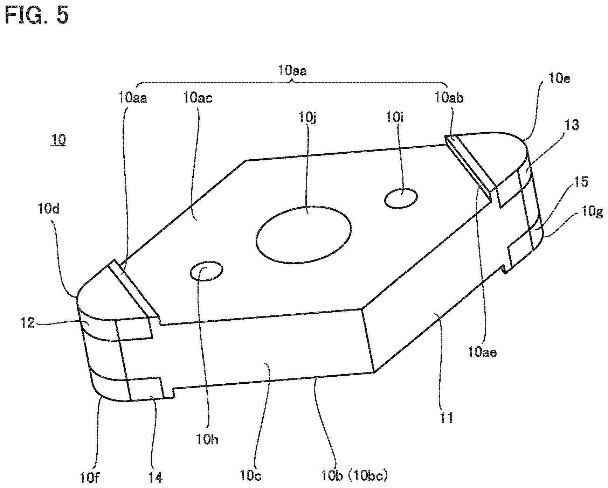

Fig. 5 is a perspective view of a cutting insert 10 according to a modification. As shown in Fig. 5, cutting insert 10 may be constituted of a substrate 11, a cutting edge tip 12, a cutting edge tip 13, a cutting edge tip 14, and a cutting edge tip 15. A cutting edge 10d, a cutting edge 10e, a cutting edge 10f, and a cutting edge 10g are formed in cutting edge tip 12, cutting edge tip 13, cutting edge tip 14, and cutting edge tip 15, respectively.

Substrate 11 is composed of, for example, a cemented carbide. Each of cutting edge tip 12, cutting edge tip 13, cutting edge tip 14, and cutting edge tip 15 is composed of, for example, a cubic boron nitride sintered material (a sintered material including cubic boron nitride grains and a binder). Each of cutting edge tip 12, cutting edge tip 13, cutting edge tip 14, and cutting edge tip 15 may be composed of a polycrystalline diamond sintered material (sintered material including diamond grains and a binder).

### <Coolant Supply Mechanism 20>

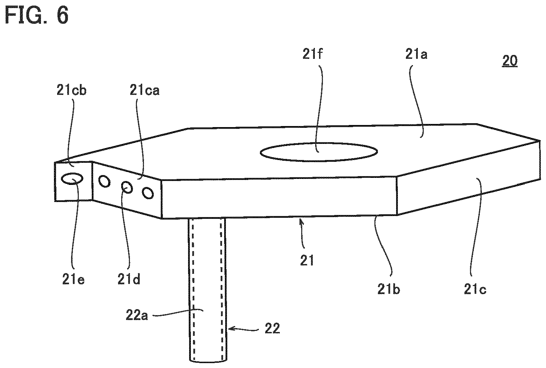

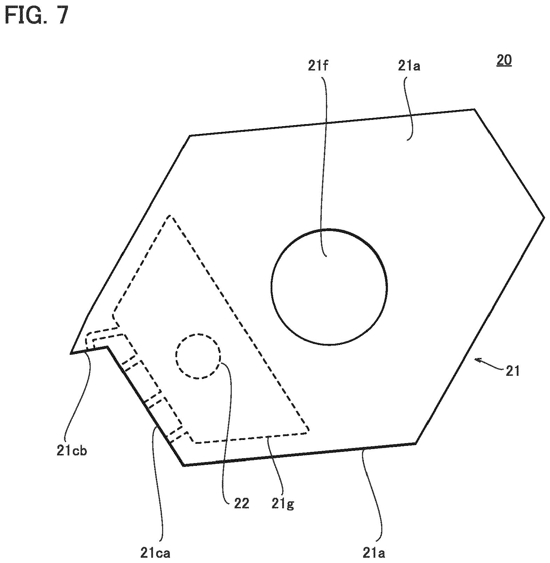

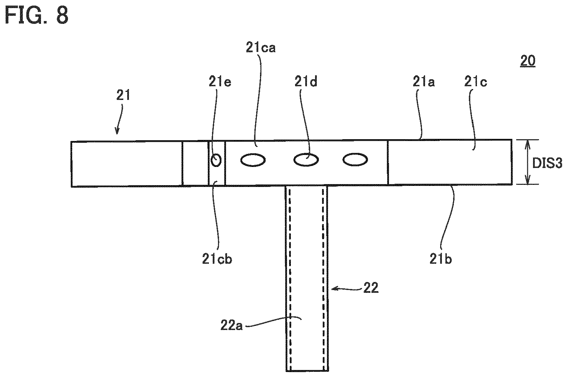

Fig. 6 is a perspective view of coolant supply mechanism 20. Fig. 7 is a plan view of coolant supply mechanism 20. Fig. 8 is a side view of coolant supply mechanism 20. As shown in Figs. 6 to 8, coolant supply mechanism 20 has a main body portion 21 and a columnar portion 22. Each of main body portion 21 and columnar portion 22 is preferably composed of a material having excellent thermal conductivity. Each of main body portion 21 and columnar portion 22 is composed of, for example, a metal material.

Main body portion 21 has an upper surface 21a, a bottom surface 21b, and a side surface 21c. Upper surface 21a is a surface opposite to bottom surface 21b. A distance between upper surface 21a and bottom surface 21b is defined as a distance DIS3. Distance DIS3 is larger than each of distance DIS1 and distance DIS2. A difference between distance DIS3 and distance DIS1 (distance DIS2) is, for example, less than 5 mm. The difference between distance DIS3 and distance DIS1 (distance DIS2) may be 1.5 mm or less. Side surface 21c is contiguous to upper surface 21a and bottom surface 21b.

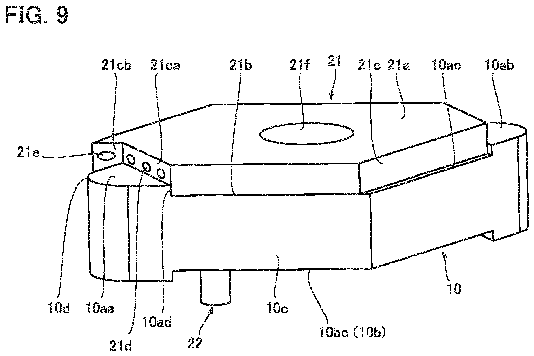

Fig. 9 is a perspective view of coolant supply mechanism 20 when attached to cutting insert 10. As shown in Fig. 9, when attached to cutting insert 10, bottom surface 21b is in contact with center portion 10ac. It should be noted that although not shown, bottom surface 21b may be in contact with center portion 10bc when attached to cutting insert 10.

Side surface 21c has a first surface 21ca. First surface 21ca is in contact with stepped surface 10ad when attached to cutting insert 10. A portion of first surface 21ca in contact with stepped surface 10ad when attached to cutting insert 10 is defined as a first portion, and a portion of first surface 21ca not in contact with stepped surface 10ad when attached to cutting insert 10 is defined as a second portion. The second portion of first surface 21ca is located on the upper surface 21a side with respect to the first portion of first surface 21ca.

It should be noted that although not shown, first surface 21ca may be in contact with stepped surface 10ae when attached to cutting insert 10. It should be also noted that although not shown, in the case where bottom surface 21b is in contact with center portion 10bc when attached to cutting insert 10, first surface 21ca is in contact with one of stepped surface 10bd and stepped surface 10be.

A coolant hole 21d is formed in the second portion of first surface 21ca. A plurality of coolant holes 21d may be formed. Since center portion 10ac is located adjacent to corner portion 10aa on the side opposite to cutting edge 10d and stepped surface 10ad is contiguous to center portion 10ac and corner portion 10aa, the first portion of first surface 21ca is in contact with stepped surface 10ad, with the result that coolant hole 21d faces cutting edge 10d and the coolant ejected from coolant hole 21d is supplied from the corner portion 10aa side (i.e., the rake surface side contiguous to cutting edge 10d) to cutting edge 10d.

Side surface 21c further has a second surface 21cb. Second surface 21cb faces side surface 10c with a space being interposed therebetween. Second surface 21cb is contiguous to first surface 21ca. Coolant hole 21e is formed in second surface 21cb. Since second surface 21cb faces side surface 10c with a space being interposed therebetween, the coolant ejected from coolant hole 21e is supplied to side surface 10c (i.e., the flank face contiguous to cutting edge 10d).

The number of coolant holes 21e is smaller than the number of coolant holes 21d, for example. The inner diameter of coolant hole 21e is preferably larger than the inner diameter of coolant hole 21d. It should be noted that when the shape of each of coolant hole 21d and coolant hole 21d is not a circular shape, each of the inner diameter of coolant hole 21d and the inner diameter of coolant hole 21e is measured along the direction from upper surface 21a toward bottom surface 21b. Further, the center position of coolant hole 21e is preferably located close to bottom surface 21b with respect to the center position of coolant hole 21d.

A through hole 21f is formed in main body portion 21. Through hole 21f extends through main body portion 21 along the direction from upper surface 21a toward bottom surface 21b (along the thickness direction of main body portion 21). Through hole 21f is located at a position overlapping with through hole 10j when attached to cutting insert 10.

Columnar portion 22 extends from bottom surface 21b along a direction intersecting bottom surface 21b (preferably, a direction orthogonal to bottom surface 21b). When attached to cutting insert 10, columnar portion 22 is inserted in through hole 10h. From another viewpoint, it can be said that columnar portion 22 is located between first surface 21ca and through hole 21f when viewed in a plan view. The tip of columnar portion 22 protrudes from bottom surface 10b (center portion 10bc) when attached to cutting insert 10.

It should be noted that when the first portion of first surface 21ca is in contact with stepped surface 10ae, columnar portion 22 is inserted in through hole 10i. Further, in the case where bottom surface 21b is in contact with center portion 10bc, columnar portion 22 is inserted in through hole 10h when the first portion of first surface 21ca is in contact with stepped surface 10bd, and is inserted in through hole 10i when stepped surface 10be is in contact with the first portion of first surface 21ca.

The inside of columnar portion 22 is preferably hollow. That is, a flow path 22a (indicated by a dotted line in Figs. 6 and 8) through which the coolant flows is formed inside columnar portion 22. A hollow portion 21g (indicated by a dotted line in Fig. 7) is formed inside main body portion 21. Flow path 22a is connected to hollow portion 21g. Coolant hole 21d and coolant hole 21e communicate with hollow portion 21g. Therefore, the coolant flowing through flow path 22a is ejected from coolant hole 21d and coolant hole 21e via hollow portion 21g.

### <Holder 30>

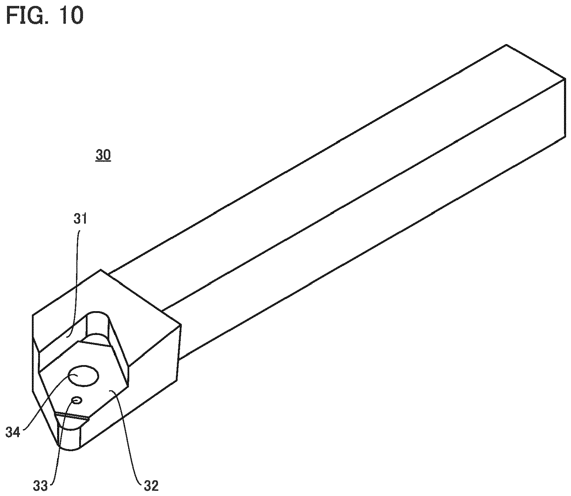

Fig. 10 is a perspective view of holder 30. As shown in Fig. 10, holder 30 has a pocket 31 at its tip. A protrusion 32 is formed on the bottom surface of pocket 31. Protrusion 32 has a shape conforming to a recess defined by center portion 10bc, stepped surface 10bd, and stepped surface 10be. Protrusion 32 is fitted in this recess when cutting insert 10 is attached to holder 30.

A flow path 33 is formed inside holder 30. Coolant flows through flow path 33. One end of flow path 33 is opened at the bottom surface of pocket 31. Although not shown, the other end of flow path 33 is connected to a coolant supply pipe. When cutting insert 10 to which coolant supply mechanism 20 is attached is attached to holder 30, the tip of columnar portion 22 is connected to one end of flow path 33.

A screw hole 34 is formed in the bottom surface of pocket 31. Fixing member 40 is, for example, a screw. Fixing member 40 is inserted into through hole 10j and through hole 21f, and is screwed into screw hole 34. Thus, cutting insert 10 and coolant supply mechanism 20 are fastened and fixed to holder 30 (pocket 31).

### (Effects of Cutting Tool according to Embodiment)

Hereinafter, effects of cutting tool 100 will be described.

In cutting tool 100, when coolant supply mechanism 20 is attached to cutting insert 10, the first portion of first surface 21ca is in contact with stepped surface 10ad, with the result that coolant hole 21d formed in the second portion of first surface 21ca is positioned with respect to cutting edge 10d. Therefore, according to cutting tool 100 using coolant supply mechanism 20, coolant can be precisely supplied to cutting edge 10d.

In cutting tool 100, since coolant supply mechanism 20 is attached to the recess defined by center portion 10ac, stepped surface 10ad, and stepped surface 10ae, an amount of protrusion of upper surface 21a from corner portion 10aa can be made small. As a result, according to cutting tool 100 using coolant supply mechanism 20, coolant supply mechanism 20 is less likely to interfere with a workpiece when performing inner-diameter processing.

In cutting tool 100, when coolant supply mechanism 20 is attached to cutting insert 10, columnar portion 22 is inserted in through hole 10h. Therefore, according to cutting tool 100 using coolant supply mechanism 20, positioning is performed further readily when attaching coolant supply mechanism 20 to cutting insert 10.

In cutting tool 100, the coolant flowing through the inside of columnar portion 22 (flow path 22a) cools cutting insert 10. Therefore, according to cutting tool 100 using coolant supply mechanism 20, cooling of cutting insert 10 can be facilitated. Further, in cutting tool 100, columnar portion 22 is inserted in through hole 10h, with the result that the coolant flowing through flow path 22a passes through a position close to cutting edge 10d. Therefore, according to cutting tool 100 using coolant supply mechanism 20, cutting insert 10 can be cooled at a portion close to cutting edge 10d.

In cutting tool 100, since the coolant is ejected from coolant hole 21e, the coolant can also be supplied to the flank face side of cutting edge 10d. When the inner diameter of coolant hole 21e is larger than the inner diameter of coolant hole 21d or when the center position of coolant hole 21e is located close to bottom surface 21b with respect to the center position of coolant hole 21d, the coolant can be further readily supplied to the flank face side of cutting edge 10d.

In cutting tool 100, when cutting insert 10 is attached to holder 30, protrusion 32 is fitted in the recess defined by center portion 10bc, stepped surface 10bd, and stepped surface 10be, with the result that restraint strength for cutting insert 10 by holder 30 can be increased and precision in positioning of cutting insert 10 with respect to holder 30 can be increased.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

100: cutting tool; 10: cutting insert; 10a: upper surface; 10aa, 10ab: corner portion; 10ac: center portion; 10ad, 10ae: stepped surface; 10b: bottom surface; 10ba, 10bb: corner portion; 10bc: center portion; 10bd, 10be: stepped surface; 10bc: center portion; 10c: side surface; 10d, 10e, 10f, 10g: cutting edge; 10h, 10i, 10j: through hole; 11: substrate; 12, 13, 14, 15: cutting edge tip; 20: coolant supply mechanism; 21: main body portion; 21a: upper surface; 21b: bottom surface; 21c: side surface; 21ca: first surface; 21cb: second surface; 21d, 21e: coolant hole; 21f: through hole; 21g: hollow portion; 22: columnar portion; 22a: flow path; 30: holder; 31: pocket; 32: protrusion; 33: flow path; 34: screw hole; 40: fixing member; DIS1, DIS2, DIS3: distance.

## Claims

1. A coolant supply mechanism attachable to a cutting insert, wherein
the cutting insert has a first bottom surface, a first upper surface opposite to the first bottom surface, and a first side surface contiguous to the first bottom surface and the first upper surface,
the first upper surface includes a corner portion that is located at a corner of the first upper surface when viewed in a plan view and that is contiguous to the first side surface so as to form a cutting edge, and a center portion located adjacent to the corner portion on a side opposite to the cutting edge when viewed in a plan view, and
the first upper surface is depressed toward the first bottom surface side at the center portion,
the coolant supply mechanism comprising a main body portion having a second bottom surface that is in contact with the center portion when attached to the cutting insert, a second upper surface opposite to the second bottom surface, and a second side surface contiguous to the second bottom surface and the second upper surface, wherein
the second side surface has a first surface including a first portion that is in contact with a stepped surface between the corner portion and the center portion when attached to the cutting insert, and a second portion that is located on the second upper surface side with respect to the first portion, and
the second portion is provided with a first coolant hole to eject coolant toward the cutting edge.

2. The coolant supply mechanism according to claim 1, further comprising a columnar portion that extends from the second bottom surface along a direction intersecting the second bottom surface and that is inserted into a first through hole formed in the center portion so as to extend through the cutting insert along a direction from the first upper surface toward the second upper surface when attached to the cutting insert.

3. The coolant supply mechanism according to claim 2, wherein
inside of the columnar portion is hollow, and
the coolant is ejected from the first coolant hole through the inside of the columnar portion.

4. The coolant supply mechanism according to claim 3, wherein
the main body portion is provided with a third through hole extending through the main body portion along a direction from the second upper surface toward the second bottom surface, the third through hole being located at a position overlapping with a second through hole formed in the center portion so as to extend through the cutting insert along a direction from the first upper surface toward the first bottom surface when attached to the cutting insert, and
the columnar portion is located between the first surface and the third through hole when viewed in a plan view.

5. The coolant supply mechanism according to any one of claims 1 to 4, wherein the second side surface is provided with a second coolant hole to eject the coolant toward the first side surface.

6. The coolant supply mechanism according to claim 5, wherein
the second side surface further has a second surface facing the first side surface with a space being interposed between the second surface and the first side surface, and
the second coolant hole is formed in the second surface.

7. The coolant supply mechanism according to claim 6, wherein an inner diameter of the second coolant hole is larger than an inner diameter of the first coolant hole.

8. The coolant supply mechanism according to claim 6, wherein a center position of the second coolant hole is located close to the second bottom surface with respect to a center position of the first coolant hole.
